**Europäisches Patentamt**

**European Patent Office**

**Office européen des brevets**

(11) Veröffentlichungsnummer: **0 408 039 A2**

# (12) EUROPÄISCHE PATENTANMELDUNG

(21) Anmeldenummer: **90113385.0**

(22) Anmeldetag: **12.07.90**

(51) Int. Cl.5: **G01N 27/417**

(30) Priorität: **13.07.89 DE 3923193**

(43) Veröffentlichungstag der Anmeldung:
**16.01.91 Patentblatt 91/03**

(84) Benannte Vertragsstaaten:
**DE FR GB NL**

(71) Anmelder: **Max-Planck-Gesellschaft zur Förderung der Wissenschaften e.V.**
**Bunsenstrasse 10**
**D-3400 Göttingen(DE)**

(72) Erfinder: **Liaw, Bor Yann, Dr.**
**1842 Alaweo St.**
**Honolulu, HI 96821(US)**
Erfinder: **Weppner, Werner, Prof. Dr.**
**Weinbergweg 20 A**
**D-7000 Stuttgart 1(DE)**

(74) Vertreter: **Liska, H., Dr.-Ing. et al**
**Möhlstrasse 22**
**D-8000 München 80(DE)**

(54) **Grenzstromsensor zum Messen des Partialdrucks eines Gases.**

(57) Zur Messung von Gaspartialdrücken, insbesondere von Sauerstoffpartialdrücken, wird ein Grenzstromsensor vorgeschlagen, dessen Festelektrolytelement (1e) aus tetragonalem, polykristallinem $ZrO_2$ mit einer Korngröße von weniger als 4 µm besteht. Als Gasdiffusionsbarriere ist das Festelektrolytelement (1e) mit einer Festkörperschicht (9e) aus einem die Diffusion von Sauerstoff zulassenden Oxid-Festkörpermaterial abgedeckt. Soweit die Abdeckung (9e) aus hauptsächlich ionenleitendem Material besteht, trägt sie beidseitig Elektroden, die zum Ausgleich elektronischer Minoritätsladungsträger durch eine Kurzschlußverbindung (31) oder eine Strom- bzw. Spannungsquelle miteinander verbunden sind.

FIG.6

## GRENZSTROMSENSOR ZUM MESSEN DES PARTIALDRUCKS EINES GASES

Die Erfindung betrifft einen Grenzstromsensor zum Messen des Sauerstoffgaspartialdrucks, mit einem ionenleitenden Zirkondioxid-Festelektrolytelement, dessen Elektrolytstrecke zwischen gasdurchlässigen, mit einer Gleichspannungsquelle verbundenen Elektroden angeordnet ist und mit einer den Gaszutritt zur Kathodenseite der Elektrolytstrecke begrenzenden Diffusionsbarriere.

Unter Verwendung von kubisch stabilisiertem Zirkondioxid ($ZrO_2$) aufgebaute Grenzstromsensoren für die Messung des Sauerstoffgaspartialdrukkes sind bekannt (H. Jahnke, B. Moro, H. Dietz und B. Beyer, Ber. Bunsenges. Phys. Chem. 92, 1250-1257 (1988) und H. Dietz, Solid State Ionics 6 (1982), 175-183). Bei diesen Grenzstromsensoren wird der Sauerstoffzutritt zu dem $ZrO_2$-Festelektrolyt durch eine Diffusionsbarriere auf der Kathodenseite der Elektrolytstrecke begrenzt. Bei $ZrO_2$ handelt es sich um einen reinen Sauerstoffionenleiter, der aufgrund der Potentialdifferenz zwischen den Elektroden der Elektrolytstrecke Sauerstoff durch das Elektrolytelement "pumpt". Da die Diffusionsbarriere die Sauerstoffzufuhr auf der Kathodenseite der Elektrolytstrecke begrenzt, stellt sich ein Gleichgewichtszustand zwischen den durch die Diffusionsbarriere zugeführten Sauerstoffmolekülen und den über das Sauerstoffionen leitende Festelektrolytelement "abgepumpten" Sauerstoffmolekülen ein. Bei ausreichend hoher Potentialdifferenz ist die Konzentration des Sauerstoffs auf der dem Festelektrolyt zugewandten Seite praktisch vernachlässigbar gering gegenüber dem Partialdruck des Gases. Der dabei fließende Grenzstrom ist entsprechend dem ersten Fick'schen Gesetz ein Maß für den Sauerstoffpartialdruck.

Die bekannten, auf der Basis von kubisch stabilisiertem $ZrO_2$ aufgebauten Grenzstromsensoren müssen bei Temperaturen von wenigstens 400° C betrieben werden, um ausreichend große Änderungen des Grenzstroms in Abhängigkeit von Änderungen des Sauerstoffpartialdrucks zu erhalten. Soll die Anwendung derartiger Grenzstromsensoren nicht auf Gebiete mit ohnehin hoher Gastemperatur beschränkt bleiben, so muß der Grenzstromsensor zusätzlich geheizt werden, was bei Inbetriebnahme die Einsatzbereitschaft verzögert und im übrigen angesichts der hohen zu erreichenden Temperaturen nicht zu vernachlässigende Heizleistung verbraucht. Die verzögerte Einsatzbereitschaft ist z.B. bei λ-Sonden in Kraftfahrzeugen nachteilig. Der Verbrauch an Heizleistung ist insbesondere bei mobilen Anwendungen nachteilig. Darüberhinaus sind die hohen Betriebstemperaturen des Grenzstromsensors für eine Vielzahl Anwendungsfälle, insbesondere bei medizintechnischen Anwendungen, bei der Umweltüberwachung und in der Lebensmittelindustrie unerwünscht.

Es ist ferner bekannt, kubisch stabilisiertes $ZrO_2$ bei potentiometrischen Sauerstoffpartialdrucksensoren einzusetzen (H. Dietz, W. Haecker, H. Jahnke in "Advances in Electrochem. & Electrochem. Eng.", Vol. 10, (1977), 46-90). Bei potentiometrischen Sensoren dieser Art, wie sie insbesondere auch bei λ-Sonden in Kraftfahrzeugen eingesetzt wird, beruht die Funktionsweise auf elektrochemischen Reaktionen (Redox-Reaktionen) an den Phasengrenzen zwischen dem Gas und dem Festelektrolyten. Das sich einstellende Redox-Potential ist entsprechend der Nernst'schen Gleichung ein Maß für den Partialdruck des Gases und kann, bezogen auf ein Referenzpotential einer Referenzelektrode, als Potentialdifferenz gemessen werden. Voraussetzung für eine hinreichend genaue Messung ist, daß sich an der Phasengrenze ein Phasengleichgewicht einstellen kann. Bei Verwendung von kubisch stabilisiertem $ZrO_2$ ergeben sich für die Praxis ausreichend hohe Ausgleichsraten zwischen Gas und Elektrolyt wiederum erst bei Temperaturen über 500° C. Abgesehen von der Notwendigkeit, eine Referenzelektrode zur Verfügung stellen zu müssen, hat der potentiometrische Partialdrucksensor den Nachteil, daß Partialdruckmessungen eine logarithmische Abhängigkeit der Sensorspannung vom Partialdruck aufweisen. Dieses Verfahren verlangt zur praktischen Auswertung eine größere Partialdruckänderung bei geringer Änderung der Restzusammensetzung, wie sie im Kraftfahrzeugabgas nur bei stöchiometrischer Zusammensetzung vorliegt. Deshalb sind Messungen in größeren Abstanden vom Äquivalenzpunkt vergleichsweise ungenau und stellen hohe Ansprüche an Temperaturkonstanz und Elektrodenselektivität.

Aus der DE-OS 35 43 818 ist ferner ein auf dem potentiometrischen Meßprinzip basierender Sensor zur Messung von Sauerstoffpartialdrücken mittels eines ionenleitenden Festelektrolyts bekannt. Der Festelektrolyt besteht aus tetragonalem Zirkondioxid und enthält einen Zusatz von 2 bis 3 Mol-% Yttriumoxid ($Y_2O_3$). Ein solcher Festelektrolyt erlaubt die Einstellung der Gleichgewichts-EMK innerhalb von Sekunden oder Minuten auch bei einer Arbeitstemperatur zwischen 200 und 300° C.

Es ist Aufgabe der Erfindung, einen Grenzstromsensor zu schaffen, mit dem der Sauerstoffgaspartialdruck auch bei Temperaturen unter 200° C, insbesondere auch im Bereich üblicher Raum- bzw. Umgebungstemperaturen mit vergleichsweise hoher Genauigkeit gemessen werden kann.

Diese Aufgabe wird erfindungsgemäß dadurch gelöst, daß das Zirkondioxid des Festelektrolytelements in seiner tetragonalen, polykristallinen Form mit einer Korngröße von weniger als etwa 4 μm vorliegt. Überraschenderweise hat sich gezeigt, daß tetragonales Zirkondioxid bei Verwendung als Elektrolytmaterial von Grenzstromsensoren auch bei sehr niedrigen Temperaturen, wie z.B. Raumtemperatur, noch hinreichend rasch mit Sauerstoff in ein Gleichgewicht gebracht werden kann, bei welchem der Plateau- bzw. Grenzstrom von der an den Elektroden des Festelektrolyts anliegenden Spannung im wesentlichen unabhängig ist und ein Maß für den Sauerstoffpartialdruck bildet. Die Korngröße des tetragonalen, polykristallinen Zirkondioxids von weniger als 4 μm, vorzugsweise weniger als 3 μm, stellt sicher, daß das bei Temperaturen unter etwa 500°C thermodynamisch nicht stabile tetragonale Zirkondioxid in seiner monoklinen Form auch bei Raumtemperatur stabilisiert wird, vermutlich da der relativ große Anteil der Oberflächenenergie der Körner gegenüber deren Volumen bei einer Korngröße unter 4 μm die Phasenumwandlung verhindert.

Die Kathodenseite der Elektrolytstrecke des Festelektrolytelements kann in an sich bekannter Weise mit einer zum Festelektrolytelement hin abgedichteten und mit diesem einen Hohlraum begrenzenden Abdeckung aus gasdichtem Material versehen sein. Wenigstens eine Kapillare in der Abdeckung, aber auch in dem Festelektrolytelement, die durch die Abdeckung bzw. das Festelektrolytelement hindurch in den Hohlraum hinein reicht, begrenzt die Gasdiffusion in den Hohlraum hinein. Soweit die Kapillare in dem Festelektrolytelement vorgesehen ist, pumpt das Festelektrolytelement nicht nur Sauerstoff aus dem Hohlraum ab, sondern übernimmt auch die Diffusionszufuhr des Gases. Die Kapillare läßt sich mechanisch entweder während der Herstellung des Festelektrolytelements durch einen mit dem Verdichtungsprozeß eingelegten und später herausgezogenen Faden oder auch danach mittels Ultraschallverfahren oder besser durch Laserstrahlverfahren herstellen. Durch derartige Verfahren lassen sich Kapillare mit einem Durchmesser von 5 bis 100 μm rasch herstellen. Die Lochlänge beträgt typischerweise 1 bis 2 mm.

Grenzstromsensoren, bei welchen die Diffusionsbarriere durch ein kapillares Loch in einer ansonsten gasundurchlässigen Materialschicht liegt, haben vergleichsweise ungünstige Abmessungen. Zum einen bedarf es bei größerem Sauerstoffpartialdruck (z.B. in Luft) eines langen Loches mit einer Länge, die üblicherweise im mm-Bereich liegt. Zum anderen bedarf es eines geringen Durchmessers, um die Gasdiffusion in der Gasphase (mit den üblicherweise dann vorliegenden hohen Diffusionskoeffizienten) des Loches zu begrenzen. Zu beträchtlich kleineren Abmessungen und einfacherer sowie reproduzierbarer Herstellung gelangt man, wenn die Diffusionsbarriere als Festkörper-Abdeckung aus einem die Diffusion des zu messenden Gases zulassenden Material ausgebildet ist. Bei der Festkörper-Abdeckung handelt es sich zweckmäßigerweise um gesintertes keramisches Oxidmaterial, das die Diffusion des Sauerstoffs durch das Volumen, insbesondere das Kristallgitter oder den amorphen Atomverband eines glasförmigen Materials hindurch zuläßt. Die Diffusion des Sauerstoffs im Inneren eines Festkörpers ist gegenüber dem Gas vergleichsweise langsam, so daß ein großer Querschnitt und eine geringe Dicke der Diffusionsbarriere der Wirkung eines extrem langen und dünnen Loches mit Gasdiffusion äquivalent ist. Weitere Vorteile der als Festkörper-Abdeckung mit Festkörperdiffusion ausgebildeten Diffusionsbarriere sind die einfache Herstellung sowie die hohe Übereinstimmung der Diffusion von einem Material zum anderen, da es sich um eine materialspezifische Eigenschaft handelt. Der Diffusionsfluß ist im wesentlichen allein durch chemische Parameter, d.h. durch die Konzentration intrinsischer oder extrinsischer Defekte bestimmt. Wesentlich ist insbesondere, daß sich mit Diffusionsbarrieren aus Oxid-Festkörpermaterial sehr viel leichter ein definierter, in hohem Maß reproduzierbarer, sehr geringer Diffusionsfluß erreichen läßt als bei Verwendung von gasundurchlässigen Abdeckungen mit einem kapillaren Loch. Wenngleich sich die Ausgestaltung der Diffusionsbarriere als Festkörperabdeckung speziell für Grenzstromsensoren mit einem Festelektrolytelement aus tetragonalem polykristallinem Zirkondioxid der vorstehend erläuterten Art besonders eignet, so läßt sie sich auch bei Grenzstromsensoren mit aus einem anderen Material bestehendem Festelektrolytelement verwenden. Die auf die Diffusionsbarriere aus einem Festkörper-Oxidmaterial gerichteten Ansprüche haben deshalb selbständige Bedeutung. Zum Beispiel ist die Festkörperdiffusionsbarriere auch für andere Gase, die mit einem Festelektrolyten nachweisbar sind, anwendbar.

Die Festkörperabdeckung kann ähnlich der durch ein kapillares Loch in einer gasundurchlässigen Abdeckung gebildeten Diffusionsbarriere unter Bildung eines Hohlraums im Abstand vom Festelektrolytelement angeordnet sein, wobei sie auch hier randseitig zu dem Festelektrolytelement durch geeignetes Dichtungsmaterial, wie z.B. Glas oder Epoxidharz usw. abgedichtet ist. Wesentliche Vorteile ergeben sich aber, wenn die Festkörperabdeckung und das Festelektrolytelement als flächig aufeinanderliegende Schichten ausgebildet sind. Dies hat nicht nur den Vorteil größerer mechanischer Stabilität und einfacherer Herstellungsverfahren, sondern ermöglicht auch eine beträchtliche Miniaturisierung, da sich die Schichten in Dünnschicht- bzw. Filmtechnik auf einem geeigneten Substratmaterial, wie z.B. poröser Keramik oder dergleichen, aufbringen las sen. Die Diffusionsbarriere kann direkt auf die Festelektrolytschicht aufgedampft, aufgesputtert oder in einer sonst üblichen Schichtherstellungsmethode aufgebracht werden. Der in Dünnschichttechnik hergestellte Festelektrolyt hat darüberhinaus, verglichen mit herkömmlichen, dicken Festelektrolytelementen eine sehr kurze Ansprechzeit. Insbesondere bei niedrigen Temperaturen zeigen in Dünnschichttechnik hergestellte Festelektrolytelemente nur vergleichsweise geringen Einfluß Ohm'scher Polarisation des Festelektrolyten und vielfach eine Verbreiterung des Plate-aubereichs. Zweckmäßigerweise wird das Festelek-trolytelement des Grenzstromsensors zum Nach-weis hoher Sauerstoffpartialdrücke bei niedrigen Temperaturen auch dann in Dünnschichttechnik hergestellt, wenn die Diffusionsbarriere zu dem Festelektrolytelement hin einen Hohlraum begrenzt. Die Dicke des Films liegt zweckmäßigerweise unter 0,5 mm, insbesondere unter 0,2 mm.

Die als Diffusionsbarriere dienende Oxid-Festkörperabdeckung sollte den Sauerstoff ungeladen hindurchlassen. Dies kann beispielsweise durch Oxide mit gemischter Leitfähigkeit, wie z.B. binäre oder multinäre Oxide aus z.B. $NiO$, $Cu_2O$, $CuGeO_3$ oder $Y Ba_2Cu_3O_{6+x}$. erreicht werden. Geeignet sind aber auch ionisch leitende Festkörper, wie z.B. das auch für das Festelektrolytelement benutzte tetragonale polykristalline Zirkonoxid, wenn die Elektronen statt durch das Festkörperinnere durch einen äußeren elektrischen Stromkreis geführt werden, so daß sich zusammen ein neutraler Sauer-stofffluß ergibt. Vorteil der aus dem Material des Festelektrolytelements bestehenden Diffusionsbarriere ist, daß sie gleichen thermischen Ausdehnungskoeffizienten hat, wodurch die Abdichtung gegenüber dem Festelektrolytelement erleichtert wird.

Bei hauptsächlich ionenleitenden Oxidmaterialien wird der die Sauerstoffdiffusion bestimmende chemische Diffusionskoeffizient durch den Diffu-sionskoeffizienten der elektronischen Minoritätsla-dungsträger bestimmt. Diese Blockierung und Verminderung der Sauerstoffdiffusion auf einen sehr niedrigen Wert läßt sich vermeiden, wenn die Festkörperelektrolyt-Abdeckung beiderseits ihrer Diffusionsstrecke für das zu messende Gas durchlässige Elektroden trägt, welche über eine Kurzschlußverbindung oder eine angelegte Spannung oder einen erzwungenen Strom leitend miteinander verbunden sind. Die Kurzschlußverbindung ermöglicht den Ausgleich der elektronischen Ladungsträger, so daß der chemische Diffusionskoeffizient durch die Diffusion der Ionen des zu messenden Gases, hier der Sauerstoffionen, bestimmt wird. Die angelegte Spannung bzw. der erzwungene Strom erlaubt eine Kontrolle bzw. Steuerung des Diffusionskoeffizienten. Als ionenleitendes Material der Diffusionsbarriere wird deshalb zweckmäßigerweise ein spezifisch die Gasionen des zu messenden Gases leitendes Festkörpermaterial, bei Sauerstoff z.B. $ZrO_2$, benutzt.

Die Elektroden der Elektrolytstrecke können unmittelbar auf die sich gegenüberliegenden Oberflächen des Festelektrolytelements aufgebracht werden. Geeignet sind poröse, den Gasdurchtritt zulassende Platinelektroden, die z.B. aufgedampft, aufgesputtert oder auch in Form von Leitlack aufgebracht werden. Soweit die Diffusionsbarriere an dem Festelektrolytelement flächig anliegt, kann sie direkt auf die nunmehr dazwischenliegende Elektrode der Elektrodenstrecke aufgebracht werden. Soweit die Diffusionsbarriere aus überwiegend elektronisch leitendem Oxid-Festkörpermaterial besteht, kann sie auch unmittelbar auf das Oxid-Festelektrolytelement aufgebracht werden, wobei die Elektroden der Elektrolytstrecke den Schicht-aufbau aus Diffusionsbarriere und Festelektrolytele-ment zwischen sich einschließen. Eine dritte Elektrode ist zwischen der Diffusionsbarriere und dem Festelektrolytelement erforderlich, wenn die Diffusionsbarriere aus einem ionisch leitenden Material besteht, wobei die beiden, die Diffusionsbarriere zwischen sich einschließenden Elektroden wiederum durch eine Kurzschlußverbindung oder eine Spannungs- bzw. Stromquelle miteinander verbunden sind.

Im folgenden werden Ausführungsbeispiele der Erfindung anhand einer Zeichnung näher erläutert. Hierbei zeigt:

Fig. 1 eine schematische Schnittansicht eines Grenzstromsensors mit kapillarer Diffusionsbarriere;

Fig. 2 eine Variante des Grenzstromsensors nach Fig. 1;

Fig. 3 eine schematische Schnittansicht durch einen Grenzstromsensor mit Festkörper-Diffusionsbarriere;

Fig. 4 eine schematische Schnittansicht eines Grenzstromsensors mit ionenleitender Festkörper-Diffusionsbarriere;

Fig. 5 eine schematische Schnittansicht durch einen Grenzstromsensor mit elektrisch neutral leitender Diffusionsbarriere;

Fig. 6 eine schematische Schnittansicht durch eine Variante des Grenzstromsensors aus Fig. 5;

Fig. 7a und 7b Diagramme, die die Abhängigkeit des Grenzstroms i von der Elektrolytspannung U bzw. dem Sauerstoffpartialdruck p bei einer Sensortemperatur von 600° C zeigen und

Fig. 8a und 8b den Fig. 7a und 7b entsprechende Diagramme für eine Temperatur des Grenzstromsensors von 250° C.

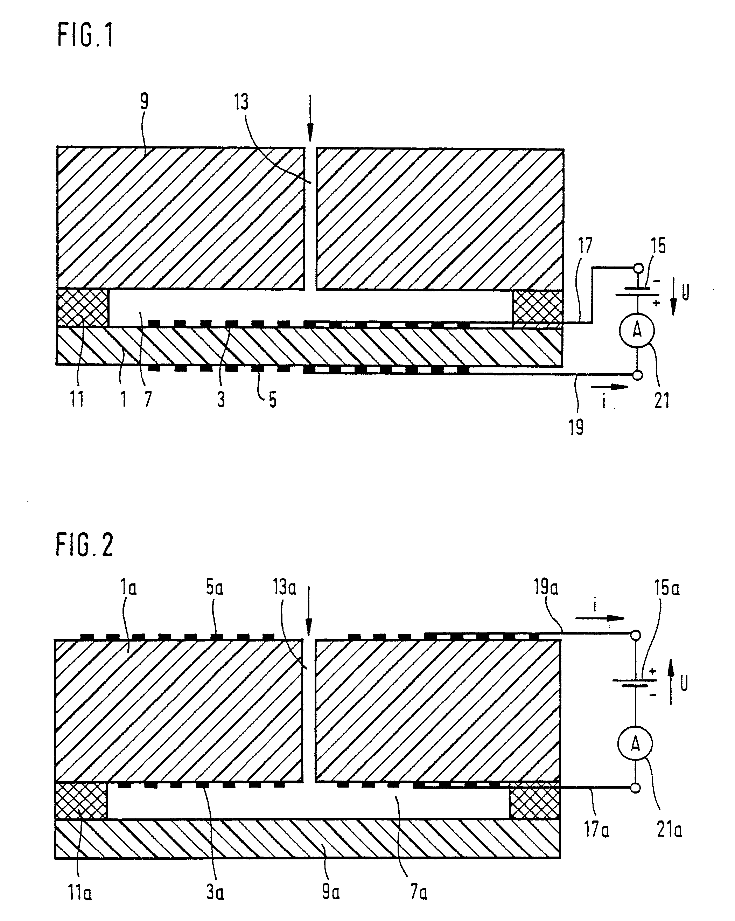

Der in Fig. 1 schematisch dargestellte Grenzstromsensor umfaßt ein schichtförmiges Festelektrolytelement 1 aus tetragonalem, polykristallinem Zirkondioxid ($ZrO_2$), welches beiderseits Elektroden 3, 5 aus porösem Platin trägt. Die Elektrode 3 ist unter Bildung eines Hohlraums 7 von einer gasdichten Abdeckung 9, aus einem kristallinen oder glasförmigen Festkörper, vorzugsweise jedoch ebenfalls aus $ZrO_2$ überdeckt, und durch eine randseitige Dichtung 11, z.B. aus Glas oder Epoxidharz, zum Festelektrolytelement 1 hin abgedichtet. Die Abdeckung 9 enthält eine Kapillare 13 mit einem Durchmesser zwischen 5 bis 100 $\mu$m und eine Länge von etwa 1 bis 2 mm hat. Während die Elektrode 5 dem Gas, dessen Sauerstoffpartialdruck bestimmt werden soll, im wesentlichen frei ausgesetzt ist, bildet die Kapillare 13 eine Diffusionsbarriere, die den Zustrom des Gases zum Hohlraum 7 und damit zur Elektrode 3 begrenzt. An die porösen Elektroden 3, 5 ist eine Gleichspannungsquelle 15 über elektronische Zuleitungen 17, 19 angeschlossen. Die Gleichspannungsquelle 15 ist so angeschlossen, daß die dem Hohlraum 7 und damit der Diffusionsbarriere zugewandte Elektrode 3 die Kathode und die gegenüberliegende Elektrode 5 die Anode bildet.

Das aus tetragonalem, polykristallinem $ZrO_2$ bestehende Festelektrolytelement 1 ist ein Sauerstoffionenleiter und "pumpt" aufgrund der Spannung U Sauerstoff aus dem Hohlraum 7 ab. Bei ausreichend hoher Elektrodenspannung U übersteigt die Pumpleistung den Diffusionsfluß, mit der Folge, daß der Sauerstoffpartialdruck im Hohlraum 7 praktisch 0 wird. Der hierbei fließende Strom i erreicht einen Plateau- bzw. Grenzwert, welcher dem Sauerstoffpartialdruck gemäß folgender Formel proportional ist:

$$ i = -4F \frac{DS\bar{P}}{RTL} \ln(1-P/\bar{P}) $$

Hierbei bedeutet:
D den Diffusionskoeffizient von Sauerstoff im Gas,
S den Querschnitt der Kapillare 13,
L die Länge der Kapillare 13,
F die Faraday'sche Konstante,
R die allgemeine Gaskonstante,
T die absolute Temperatur,
$\bar{P}$ den Gesamtdruck des Gases.
P den Sauerstoffpartialdruck in dem Gas.
Der Grenzstrom wird mittels eines Strommeßgeräts 21 gemessen.

Die vorstehende Gleichung berücksichtigt, daß die freie Weglänge der Gasmoleküle mit im Hohlraum 7 abnehmendem Sauerstoffpartialdruck zunimmt.

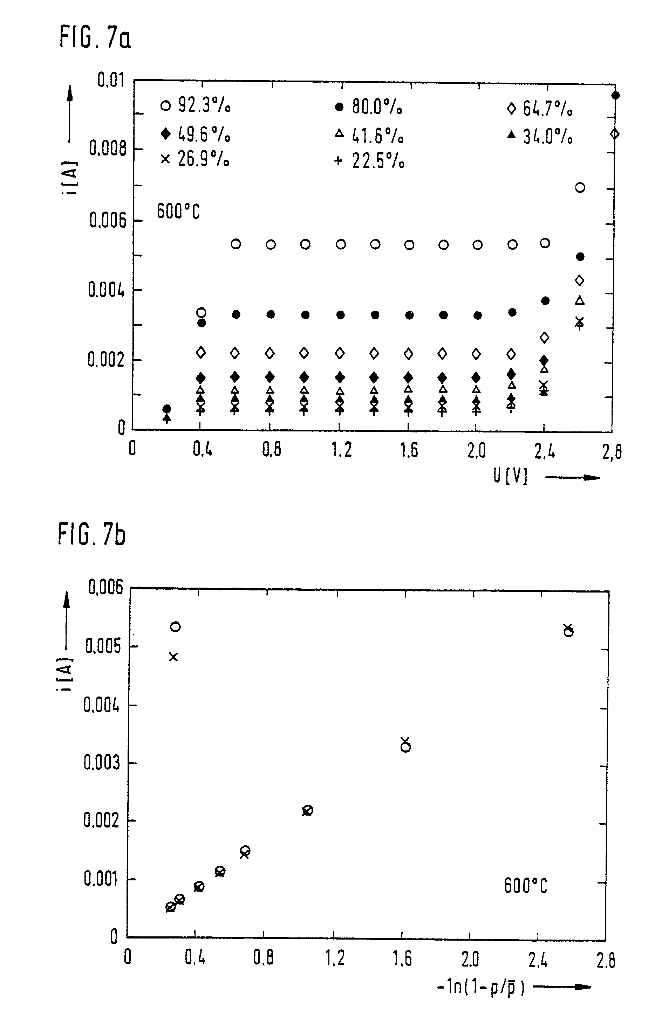

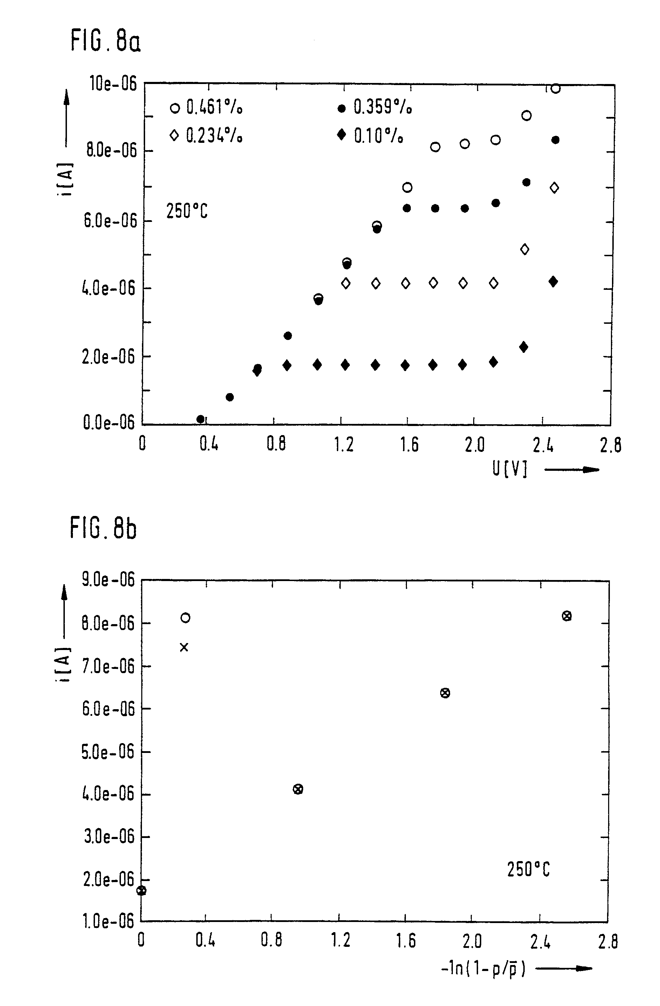

Die Fig. 7a und 8a zeigen Meßwerte des Stroms i in Abhängigkeit von der Elektrolytspannung U für unterschiedliche Werte des Sauerstoffanteils in dem aus $CO_2$, CO, $H_2$, Ar und $O_2$ bestehendem Meßgas bei Temperaturen von 600°C und 250°C. Die Fig. 7b und 8b zeigen den Zusammenhang zwischen dem durch Kreise angedeuteten gemessenen Plateau- bzw. Grenzstromwerten und den durch Kreuze angedeuteten, entsprechend der vorstehenden Gleichung errechneten Grenzstromwerten für unterschiedliche Werte des Sauerstoffpartialdrucks p. Wie die Fig. 7a und 8a zeigen, nimmt der Strom i mit wachsender Spannung U wieder zu, was auf zunehmende elektronische Leitfähigkeit und die Zersetzung des Elektrolyts zurückgeführt werden kann. Der Anstieg des Stroms i bei sehr niedriger Spannung U ist darauf zurückzuführen, daß der Sauerstoffpartialdruck in dem Hohlraum 7 nicht, wie es für die Grenzstrombetrachtungsweise erforderlich ist, gegenüber dem Sauerstoffpartialdruck des Gases vernachlässigbar ist. Darüberhinaus bestimmt in diesem Bereich der ionische Widerstand des Elektrolyts die Pumprate, so daß der Plateaustrom aufgrund ohmischer Polarisationsverluste nicht erreicht wird.

Der Plateau- bzw. Grenzstrom wird, wie die Fig. 8a und 8b zeigen, auch für niedrigere Temperaturen als bisher für Grenzstromsensoren üblich, eingestellt. Für geringe Sauerstoffpartialdrucke ist eine dünne konventionell hergestellte Tablette mit einer Dicke von 0,1 bis 1 mm hinreichend geeignet, um den Sauerstoffpartialdruck bei Raumtemperatur oder leicht erhöhter Temperatur nachzuweisen. Bei höheren Sauerstoffpartialdrucken überlappt der Bereich des Ohm'schen Anstiegs im i-U-Diagramm den Grenzstrombereich, so daß Dickschicht- oder Dünnschichtfilme anzuwenden sind.

Tetragonales, polykristallines $ZrO_2$ läßt sich in Anlehnung an das in der DE-OS 35 43 818 beschriebene Verfahren mit einer Korngröße von weniger als 4 $\mu$m, vorzugsweise weniger als 2 bis 3 $\mu$m herstellen. Durch die vergleichsweise geringe Korngröße wird das an sich unter 500°C instabile tetragonale $ZrO_2$ Temperatur-stabilisiert.

Im folgenden werden Varianten des Grenzstromsensors erläutert. Gleichwirkende Komponenten sind mit den Bezugszahlen der Fig. 1 und zur Unterscheidung mit einem Buchstaben versehen. Zur Erläuterung des Aufbaus und der Wirkungsweise wird auf die Beschreibung der Fig. 1 Bezug genommen.

Fig. 2 zeigt eine Variante des Sauerstoff-Grenzstromsensors aus Fig. 1, die sich von dieser im wesentlichen nur dadurch unterscheidet, daß die als Diffusionsbarriere dienende Kapillare 13a nicht in der gasdichten Abdeckung 9a, sondern unmittelbar in dem Festelektrolytelement 1a vorgesehen ist. Das Festelektrolytelement 1a hat damit sowohl die Funktion der Diffusionsbarriere als auch die eines "Pumpelements". Ähnlich wie bei dem Grenzstromsensor der Fig. 1 kann die Kapillare 13a durch das Einlassen und spätere Herausziehen eines Fadens während des Verdichtungsvorgangs des Festelektrolyten eingelassen werden oder durch Ultraschallverfahren oder vorzugsweise durch Laserstrahlverfahren mechanisch eingearbeitet werden. Die Herstellung der Kapillare 13a kann sowohl während der Herstellung des Festelektrolytelements 1a als auch nach dessen Herstellung erfolgen. Die gasdichte Abdeckung 9a ist wiederum zum Festelektrolytelement 1a unter Bildung eines Hohlraums 7a abgedichtet und besteht zweckmäßigerweise wiederum aus ZrO$_2$. Das Festelektrolytelement 1a besteht aus tetragonalem, polykristallinem ZrO$_2$, wie dies anhand der Fig. 1 erläutert wurde.

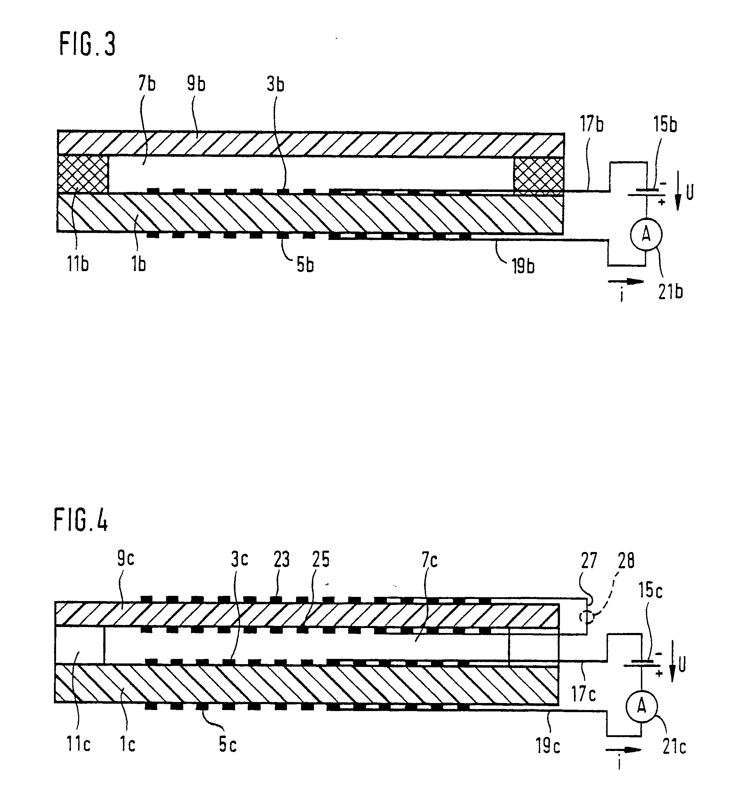

Fig. 3 zeigt einen Sauerstoff-Grenzstromsensor, dessen aus tetragonalem, polykristallinem ZrO$_2$ bestehendes Festelektrolytelement 1b unter Bildung eines Hohlraums 7b von einer Abdeckung 9b abgedichtet abgedeckt ist, die zur Bildung einer Diffusionsbarriere aus einem die Gasdiffusion von Sauerstoff zulassenden Festkörper aus gesintertem keramikartigem Oxidmaterial besteht. Das Festelektrolytelement 1b besteht wiederum aus tetragonalem, polykristallinem ZrO$_2$ der vorstehend erläuterten Art und trägt beidseits mit der Gleichspannungsquelle 15b verbundene, poröse Elektroden 3b, 5b. Die über Dichtungen 11b gasdicht mit dem Festelektrolytelement 1b verbundene Abdeckung 9b besteht aus binären oder multinären Oxiden mit neutraler Leitfähigkeit. Der Transport des Sauerstoffs erfolgt durch das kristalline oder glasförmige Innere der Diffusionsbarriere, ohne ein kapillares Loch einarbeiten zu müssen. Der Grenzstromsensor hat, da die Abdeckung 9b auch vergleichsweise dünn sein kann, kleinere Abmessungen als die vorstehend erläuterten Sensoren. Der Grenzstrom i ist dem Sauerstoffpartialdruck entsprechend dem 1. Fick'schen Gesetz annähernd proportional:

$$i \sim \tilde{D}p.$$

Hierbei bedeutet
i wiederum den Plateau- bzw. Grenzstrom,

$$\tilde{D}$$

den chemischen oder effektiven Diffusionskoeffizienten,
p den Sauerstoff-Partialdruck.

Als Material für die Abdeckung 9b eignet sich NiO, Cu$_2$O, CuGeO$_3$ oder Y Ba$_2$Cu$_3$O$_{6+x}$.

Die Abdeckung 9b des Grenzstromsensors nach Fig. 3 besteht aus Oxiden, die durch gemischte Leitfähigkeit für eine lokale Ladungsneutralität sorgen. Der Grenzstromsensor der Fig. 4 unterscheidet sich von dem Sensor der Fig. 3 dadurch, daß seine die Diffusionsbarriere bildende Abdeckung 9c aus einem ionenleitenden Festkörper-Oxidmaterial, insbesondere tetragonalem, polykristallinem ZrO$_2$ besteht. Da das Festelektrolytelement 1c und die Abdeckung 9c aus gleichen Materialien bestehen, ergibt sich eine ausgezeichnete Temperaturbeständigkeit der Abdichtung 11c aufgrund gleicher Temperatur-Ausdehnungskoeffizienten. Die Abdeckung 9c ist beiderseits mit für das Gas durchlässigen, porösen Elektroden 23, 25 belegt, die durch eine Kurzschlußverbindung 27 oder eine bei 28 angedeutete Spannungs- oder Stromquelle elektrisch leitend miteinander verbunden sind. Hierdurch wird ein Ausgleich der elektronischen Minoritätsladungsträger des hauptsächlich ionisch leitenden Festkörpermaterials der Abdeckung 9c erreicht, so daß der chemische Diffusionskoeffizient nicht durch den Diffusionskoeffizienten der elektronischen Minoritätsladungsträger bestimmt wird. Die Kurzschlußverbindung bzw. die Spannungs- oder Stromquelle stellt sicher, daß der Ausgleich der elektronischen Ladungsträger nicht blockiert wird und die Diffusionsrate durch die Sauerstoffionen sowie gegebenenfalls die äußere Spannung oder den Strom bestimmt werden.

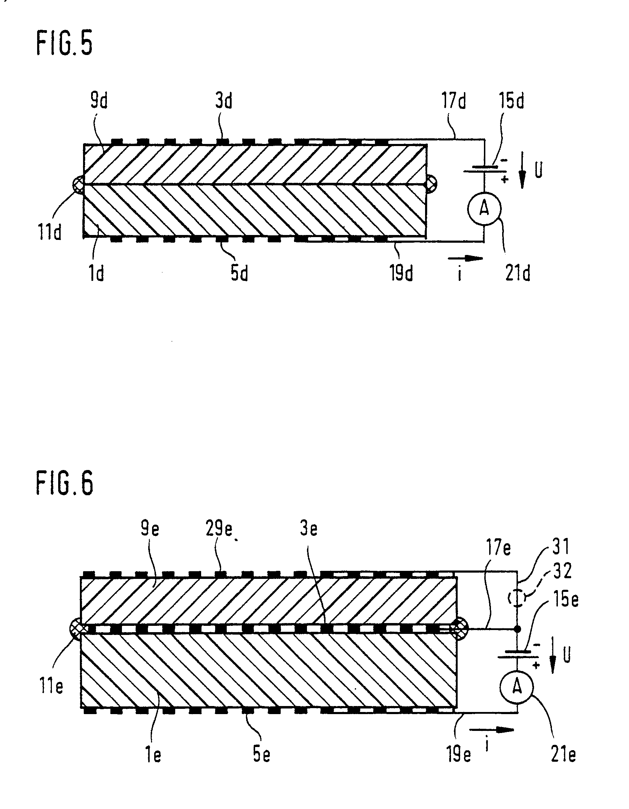

Fig. 5 zeigt einen Sauerstoff-Grenzstromsensor, bei welchem die als Diffusionsbarriere dienende Abdeckung 9d unmittelbar auf das Festelektrolytelement 1d aufgebracht, beispielsweise aufgedampft oder aufgesputtert ist. Zumindest die Abdeckung 9d, vorzugsweise jedoch auch das Festelektrolytelement 1d ist als dünne Schicht ausgebildet, so daß sich der Sensor problemlos miniaturisieren läßt. Eine gasdichte Abdichtung 11d aus Glas oder Epoxidharz dichtet den Kontakt der Abdeckung, des Festelektrolyten und des Gases ab, um einen Übergang des Sauerstoffs an dieser Stelle direkt aus dem Glas in den Festkörperelektrolyten ohne Diffusion durch die gesamte Dicke der Abdeckung zu vermeiden. Das eine Gasdiffusion zulassende Oxidmaterial der Abdeckung 9d ist elektrisch neutral leitend. Die Elektroden 3d, 5d, die wiederum aus gasdurchlässigem, porösem Platin bestehen, schließen den Schichtaufbau der Abdeckung 9d und des Festelektrolytelements 1d zwischen sich ein und sind unmittelbar auf den Schichtaufbau aufgebracht. Die auf die Abdeckung 9d aufgebrachte Elektrode 3d bildet hierbei die Kathode. Alternativ kann die Elektrode 3d jedoch auch zwischen der Abdeckung 9d und dem Festelektrolytelement 1d angeordnet sein, wobei bei der Herstellung zunächst die Elektrode 3d und dann unmittelbar daraufliegend die Abdeckung 9d aufgebracht wird. In beiden Varianten besteht die Abdeckung 9d aus einem Festkörper-Oxidmaterial mit lokaler Ladungsträger-Neutralität. Das Festelektrolytelement 1d besteht wiederum aus tetragonalem, polykristallinem Zirkondioxid.

Fig. 6 zeigt eine Variante des Grenzstromsensors aus Fig. 5, bei der die wiederum flächig auf das Festelektrolytelement 1e unter Verzicht auf einen Hohlraum als Diffusionsbarriere aufgebrachte Abdeckung 9e aus einem hauptsächlich ionenleitenden Material, insbesondere entsprechend dem Festelektrolytelement 1e aus tetragonalem, polykristallinem $ZrO_2$-Festkörpermaterial besteht. Die Elektroden 3e, 5e der Elektrolytstrecke bestehen aus porösem Platin und sind beiderseits des schichtförmigen Festelektrolytelements 1e aufgebracht, wobei die kathodenseitige Elektrode 3e zwischen der Abdeckung 9e und dem Festelektrolytelement 1e angeordnet ist. Der Elektrode 3e gegenüberliegend trägt die Abdeckung 9e eine weitere Elektrode 29, die entsprechend dem Grenzstromsensor der Fig. 4 durch eine Kurzschlußverbindung 31 oder eine bei 32 angedeutete Spannungs- oder Stromquelle mit der Elektrode 3e elektrisch leitend verbunden ist. Die Kurzschlußverbindung 31 bzw. die Spannungs- oder Stromquelle 32 sorgt für den Ausgleich elektronischer Minoritätsladungsträger des hauptsächlich ionisch leitenden Festkörpermaterials der Abdeckung 9e.

Wenngleich die vorstehend erläuterten Grenzstromsensoren aufgrund der Verwendung von tetragonalem, polykristallinem $ZrO_2$ als Festelektrolytmaterial bei sehr niedrigen Temperaturen funktionsfähig sind, so kann im Einzelfall doch eine zusätzliche Heizung vorgesehen sein. Die Heizung kann zusätzlich an dem Sensorelement angeordnet sein oder aber durch Ausnutzen ohnehin vorhandener Elektrodenzuleitungen gebildet werden.

Bei den Ausführungsbeispielen der Figuren 1 und 3 bis 6 sind die Festelektrolytelemente zweckmäßigerweise als dünne Schichten oder Filme mit einer Dicke von z.B. 0,1 mm ausgebildet. Dies erlaubt die Messung hoher Sauerstoffpartialdrucke, z.B. den in Luft bei Raumtemperatur. Die dünne Elektrolytschicht hat nur einen geringen Widerstand, wodurch der geradlinige Bereich des Stromanstiegs im niedrigen Spannungsbereich der Fig. 7a und 8a steiler wird und damit der Plateaubereich sich verbreitern kann.

## Ansprüche

1. Grenzstromsensor zum Messen des Sauerstoffgaspartialdrucks, mit einem ionenleitenden Zirkondioxid-Festelektrolytelement (1), dessen Elektrolytstrecke zwischen gasdurchlässigen, mit einer Gleichspannungsquelle (15) verbundenen Elektroden (3, 5) angeordnet ist und mit einer den Gaszutritt zur Kathodenseite der Elektrolytstrecke begrenzenden Diffusionsbarriere (9, 13) **dadurch gekennzeichnet,** daß das Zirkondioxid des Festelektrolytelements (1) in seiner tetragonalen, polykristallinen Form mit einer Korngröße von weniger als etwa 4 $\mu$m vorliegt.

2. Grenzstromsensor nach Anspruch 1, **dadurch gekennzeichnet,** daß das Zirkondioxid eine Korngröße von weniger als 3 $\mu$m hat.

3. Grenzstromsensor nach Anspruch 1 oder 2, **dadurch gekennzeichnet,** daß die Kathodenseite der Elektrolytstrecke des Festelektrolytelements (1; 1a) mit einer zum Festelektrolytelement (1; 1a) hin abgedichteten und mit diesem einen Hohlraum (7; 7a) begrenzenden Abdeckung (9; 9a) aus gasdichtem Material überdeckt ist und daß durch die Abdeckung (9) oder/und das Festelektrolytelement (1a) wenigstens eine in dem Hohlraum (7; 7a) mündende Kapillare (13; 13a) hindurchreicht.

4. Grenzstromsensor nach Anspruch 3, **dadurch gekennzeichnet,** daß die Abdeckung (9; 9a) aus Zirkondioxid besteht.

5. Grenzstromsensor zum Messen eines Gaspartialdrucks, insbesondere von Sauerstoff, mit einem ionenleitenden Festelektrolytelement (1b-1e), insbesondere einem Oxid-Festelektrolytelement, vorzugsweise einem Zirkondioxid-Festelektrolytelement, dessen Elektrolytstrecke zwischen gasdurchlässigen, mit einer Gleichspannungsquelle (15b-15e) verbundenen Elektroden (3b-3e, 5b-5e) angeordnet ist und mit einer den Gaszutritt zu einer der Seiten, insbesondere der Kathodenseite der Elektrolytstrecke begrenzenden Diffusionsbarriere (9b-9e), insbesondere nach Anspruch 1 oder 2, **dadurch gekennzeichnet,** daß die Diffusionsbarriere als Festkörper-Abdeckung (9b-9e) aus einem die Diffusion des zu messenden Gases zulassenden Oxidmaterial ausgebildet ist.

6. Grenzstromsensor nach Anspruch 5, **dadurch gekennzeichnet,** daß die Festkörper-Abdeckung (9b; 9c) zusammen mit dem Festelektrolytelement (1b; 1c) einen Hohlraum (7b; 7c) begrenzt.

7. Grenzstromsensor nach Anspruch 5, **dadurch gekennzeichnet,** daß die Festkörper-Abdeckung (9d; 9e) und das Festelektrolytelement (1d; 1e) als flächig aufeinanderliegende Schichten ausgebildet sind.

8. Grenzstromsensor nach einem der Ansprüche 5 bis 7, **dadurch gekennzeichnet,** daß die Festkörper-Abdeckung (9d) im wesentlichen aus einem leitenden Oxidmaterial besteht und in flächig leitender Verbindung auf dem Festelektrolytelement (1d) anliegt und daß eine der Elektroden (3d) der Elektrolytstrecke auf der von dem Festelektrolytelement (1d) abgewandten Seite der Festkörper-Abdeckung (9d) angeordnet ist.

9. Grenzstromsensor nach Anspruch 8, **dadurch gekennzeichnet,** daß die Festkörper-Abdeckung (9d) im wesentlichen aus einem in der Hauptsache elektronisch leitenden multinären, zumindest jedoch binären Oxidmaterial besteht.

10. Grenzstromsensor nach Anspruch 9, **dadurch gekennzeichnet,** daß die Festkörper-Abdeckung (9d) NiO, $Cu_2O$, $CuGeO_3$ oder $Y\,Ba_2Cu_3O_{6+x}$ enthält.

11. Grenzstromsensor nach einem der Ansprüche 5 bis 8, **dadurch gekennzeichnet,** daß die Festkörper-Abdeckung (9c; 9e) im wesentlichen aus einem in der Hauptsache ionenleitenden Oxidmaterial besteht und beiderseits ihrer Diffussionsstrecke für das zu messende Gas durchlässige Elektroden (23, 25; 3e, 29) trägt, die miteinander über eine Kurzschlußverbindung (27; 31) oder eine Spannungsquelle oder eine Stromquelle (28; 32) leitend verbunden sind.

12. Grenzstromsensor nach Anspruch 11, **dadurch gekennzeichnet,** daß die dem Festelektrolytelement (1e) zugewandte Elektrode (3e) sowohl am Festelektrolytelement (1e) als auch an der Festkörper-Abdeckung (9e) kontaktierend anliegt und zugleich mit der Spannungsquelle (15e) verbunden ist.

13. Grenzstromsensor nach Anspruch 11 oder 12, **dadurch gekennzeichnet,** daß die Festkörper-Abdeckung (9c; 9e) aus Oxid-Festelektrolytmaterial, insbesondere im wesentlichen aus Zirkondioxidmaterial besteht.

14. Grenzstromsensor nach einem der Ansprüche 1 bis 13, **dadurch gekennzeichnet,** daß das Festelektrolytelement (1-1e) als Film ausgebildet ist.

15. Grenzstromsensor nach Anspruch 14, **dadurch gekennzeichnet,** daß die Dicke des Festelektrolytelements (1-1e) weniger als 0,5 mm, insbesondere weniger als 0,2 mm beträgt.

16. Grenzstromsensor nach einem der Ansprüche 14 oder 15, **dadurch gekennzeichnet,** daß das Festelektrolytelement (1-1e) als durch Exzimer-Laser-Ablation hergestellter Film ausgebildet ist.

FIG.1

FIG.2

FIG.3

FIG.4

FIG.5

FIG.6

FIG. 7a

FIG. 7b

FIG. 8a

FIG. 8b